# NEUE EUROPÄISCHE PATENTSCHRIFT

(11) **EP 0 780 192 B2**
(45) Veröffentlichungstag und Bekanntmachung des Hinweises auf die Entscheidung über den Einspruch: **29.01.2003**
(45) Hinweis auf die Patenterteilung: 16.02.2000
(21) Anmeldenummer: 96118896.8
(22) Anmeldetag: 25.11.1996
(51) Int. Cl.: B23Q 1/00, B23B 31/26, B23B 31/30, B23Q 11/10

(54) **Spindeleinheit für Werkzeugmaschinen**
Spindle unit for machine-tools
Unité de broche pour machines-outils

(30) Priorität: 22.12.1995 DE 29520427 U
(43) Veröffentlichungstag der Anmeldung: 25.06.1997
(73) Patentinhaber: DECKEL MAHO GmbH, D-87459 Pfronten (DE)
(72) Erfinder: Geissler, Alfred, 87459 Pfronten (DE)
(74) Vertreter: Beetz & Partner Patentanwälte

(56) Entgegenhaltungen:
- DE-C- 3 706 534
- JP-A- 4 191 587
- US-A- 4 957 398
- US-A- 5 420 388
- PATENT ABSTRACTS OF JAPAN vol. 9, no. 162 (M-394), 6.Juli 1985 & JP 60 034244 A (OKUMA TEKKOSHO KK), 21.Februar 1985,

## Beschreibung

Die Erfindung betrifft eine Spindeleinheit für Werkzeugmaschinen gemäß dem Oberbegriff des Anspruchs 1. Eine derartige Spindeleinheit ist aus der US-A-4 975 398 bekannt.

Bei herkömmlichen Spindeleinheiten mit innerer Kühlmittelzufuhr sind die Bauelemente zur Einspeisung des Kühlmittels von stationären Rohrleitungen in die bei der Bearbeitung rotierenden Teile der Spanneinheit als separate Einheit im Anschluß an die Betätigungseinrichtung angeordnet. Dadurch erreicht die gesamte Spindeleinheit eine beträchtliche Baulänge, was insbesondere bei verschwenkbaren Spindeleinheiten zu Einschränkungen im Arbeitsraum der Werkzeugmaschine führt.

Aus der US-A-4 957 398 ist eine Spindeleinheil für Werkzeugmaschinen bekannt, die eine in einem Gehäuse drehbar gelagerte und durch einen Motor antreibbare Arbeitsspindel zur Aufnahme eines Werkzeugs enthält. Innerhalb der Arbeitsspindel ist eine hydraulisch betätigte Spanneinheit mit einer integrierten inneren Kühlmittelleitung angeordnet. Die Zufuhr des Kühlmittels von einer stationären Versorgungsleitung zu der sich mit der Arbeitsspindel drehenden Kühlmittelleitung innerhalb der Spindeleinheit erfolgt durch eine Verbindungseinrichtung, die im Anschluß an eine Hydraulikeinheit zur Betätigung der Spanneinheit angeordnet ist.

Aus der Fig. 3 der JP-A-04 191 587 ist eine Spindeleinheit mit einer Spanneinrichtung zum Fixieren und Lösen eines Werkzeugs bekannt, bei der die Bearbeitungsflüssigkeit eine Drehverbindung durchströmt. Zum Spannen und Lösen eines Werkzeugs ist in einem als Gehäuse dienenden Zylinder 73 ein ringzylindrischer Kolben 74 axial verschiebbar angeordnet, in dessen Innerem eine Hülse 2 relativ zu dem Kolben 74 axial verschiebbar befestigt ist. Der Zylinder 73, der Kolben 74 und die Hülse 2 bilden im wesentlichen den drehfesten Teil der Anordnung. Gegenüber der Hülse 2 befindet sich ein Rohrstück 1A, das in das Ende einer Spannstange 6 eingeschraubt ist, die in einer Spindel 5 axial verschiebbar eingepaßt ist. Der Verbund aus Rohrstück 1A, Spannstange 6 und Spindel 5 bildet im wesentlichen den um die gemeinsame Symmetrieachse der oben genannten Bauteile drehbaren Teil der beschriebenen Anordnung.

Dabei ist die Kraftangriffsfläche des ringzylindrischen Teils in Relation zu dem gesamten Massivkolben vergleichsweise gering.

Aufgabe der Erfindung ist es, eine kurze und kompakte Spindeleinheit mit innerer Kühlmittelzufuhr zu schaffen.

Diese Aufgabe wird erfindungsgemäß durch eine Spindeleinheit mit den Merkmalen des An-Anspruchs 1 gelöst.

Durch die Integration einer Drehdurchführung zur Überleitung eines Kühlmittels innerhalb der Betätigungseinrichtung ergibt sich eine äußerst kompakte Baueinheit aus Betätigungsmechanismus und Drehdurchführung, so daß die Baulänge der Spindeleinheit nicht vergrößert wird. Daher ist eine derartige Spindeleinheit insbesondere auch für den Einsatz als Schwenkspindel geeignet, da der für die Verschwenkung erforderliche Platzbedarf im Arbeitsraum der Werkzeugmaschine in der Regel beschränkt ist.

Der Betätigungsmechanismus ist als Zylinder/Kolben-Einheit mit einem ringzylindrischen Kolben ausgebildet, der in einem Ringraum zwischen einem Gehäuseteil und einem zylindrischen Innenteil angeordnet ist. In das zylindrische Innenteil ist die Drehdurchführung vom ringzylindrischen Kolben konzentrisch umgeben eingebaut. Dadurch sind sowohl der Betätigungsmechanismus als auch die Drehdurchführung auf besonders platzsparende Weise angeordnet.

Zur abgedichteten Überleitung der Kühlflüssigkeit von der stationären Zufuhrleitung in die bei der Bearbeitung rotierenden Teile der Spanneinheit weist die Drehdurchführung zweckmäßigerweise einen mit den rotierenden Teilen verbundenen Anschlußstutzen und eine durch den Kühlmitteldruck dichtend an den Anschlußstutzen angepresste Hülse auf, die in die Zufuhrleitung mündet. An den aneinandergrenzenden Stirnflächen der Hülse und des Anschlußstutzens sind zweckmäßigerweise ein Gleit- bzw. Gegenring aus verschleißfestem Material angeordnet.

Auf die zur Zufuhrleitung gewandte hintere Stirnfläche der Hülse wirkt der Kühlmitteldruck bei der Bearbeitung mit innerer Kühlmittelzufuhr ein und drückt die Hülse gegen das Anschlußstück. Dadurch wird eine vorteilhafte Dichtverbindung zwischen der Hülse und dem Anschlußstutzen erreicht. Bei einer Bearbeitung ohne Kühlmittel wirkt kein Druck auf die hintere Stirnfläche der Hülse, so daß diese bei einer zweckmäßigen Ausführung durch eine Feder vom Anschlußstutzen weggedrückt wird, wenn kein Kühlmitteldruck auf die Hülse einwirkt. Dies führt dazu, daß die an den aneinandergrenzenden Stirnflächen von Anschlußstutzen und Hülse angeordneten Dichtringe nur dann aufeinandergleiten, wenn eine innere Kühlmittelzufuhr benötigt und daher eine dichtende Verbindung erforderlich ist. Dadurch kann ein zu starker Verschleiß zwischen den beiden Ringen vermieden werden.

Die Kraftübertragung von dem Kolben auf die Spannstange der Spanneinheit erfolgt in vorteilhafter Weise über einen axial verschiebbaren Druckring, an dem auf die Spanneinheit wirkende Zylinderstifte befestigt sind. Die Zylinderstifte sind in den entsprechenden Bohrungen einer in das hintere Ende der Arbeitsspindel eingeschraubten Zwischenbuchse geführt.

Eine besonders kompakte Bauweise der Spindeleinheit wird dadurch erreicht, daß diese als Motorspindel ausgebildet ist. Dabei wird die Spindel konzentrisch vom Motor umgeben, dessen Rotor drehfest mit der Arbeitsspindel verbunden ist.

Weitere Besonderheiten und Vorzüge der Erfindung ergeben sich aus der folgenden Beschreibung eines bevorzugten Ausführungsbeispiels anhand der Zeichnung. Es zeigen:
- Fig. 1: einen Längsschnitt durch eine Spindeleinheit gemäß der Erfindung und
- Fig. 2: eine vergrößerte Schnittdarstellung des Betätigungsmechanismus für die Spanneinheit mit integrierter Kühlmittelzufuhr.

In beiden Figuren ist die in der Spindeleinheit integrierte Spanneinheit jeweils in der linken Bildhälfte in der Lösestellung und in der rechten Bildhälfte in der Spannstellung dargestellt.

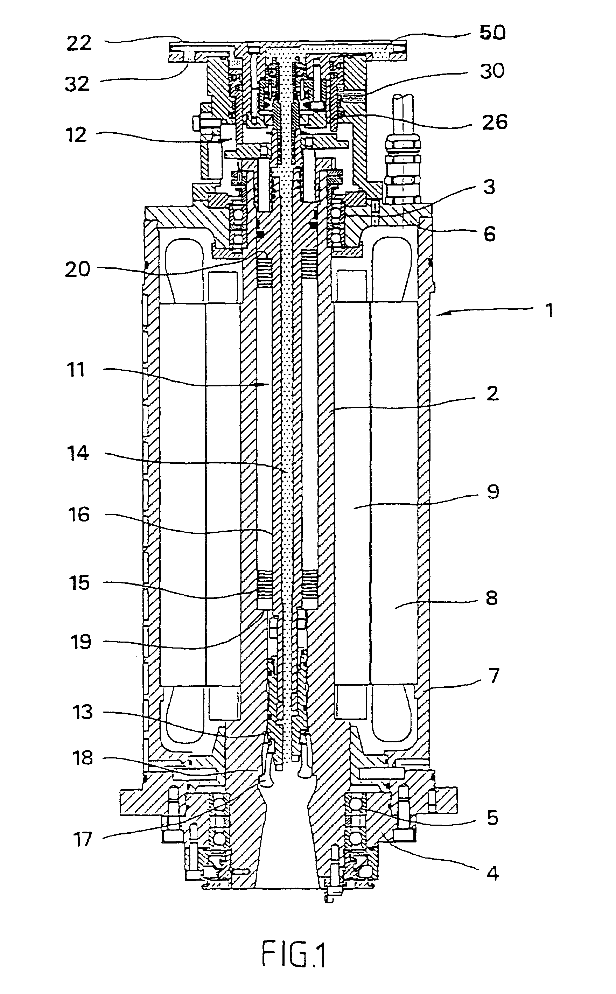

Die in Fig. 1 dargestellte Spindeleinheit 1 einer Universal-Werkzeugmaschine umfaßt eine als Hohlwelle ausgebildete Arbeitsspindel 2, die über eine Lageranordnung 3, 4 in zwei stirnseitigen Lagerdeckeln 5, 6 eines Spindelgehäuses 7 drehbar gelagert ist. Der Antrieb der Arbeitsspindel 2 erfolgt durch einen im Spindelgehäuse 7 zwischen den beiden Lagerdeckeln 5, 6 angeordneten Antriebsmotor 8, dessen Rotor 9 die Arbeitsspindel 2 konzentrisch umgibt und mit dieser drehfest verbunden ist.

Die Spindeleinheit 1 enthält eine Spanneinheit 11 mit einem Betätigungsmechanismus 12. Die Spanneinheit 11 umfaßt eine hohle Spannbuchse 13, die am vorderen Ende einer mit einer Durchgangsbohrung 14 versehenen und über ein Tellerpaket 15 vorgespannten Spannstange 16 befestigt ist. An dem vorderen Ende der Spannbuchse 13 sind seitlich verschwenkbare Greifer 17 angeordnet, die in der Spannstellung durch einen Vorsprung 18 an der Innenwandung der Arbeitsspindel 2 zum Eingriff in eine entsprechende Nut eines Werkzeugs bzw. einer Werkzeugaufnahme nach innen gedrückt sind. Das Tellerfederpaket 15 ist einerseits auf einem Ringabsatz 19 in der Arbeitsspindel 2 und andererseits auf einem Bund 20 am hinteren Bereich der Spannstange 16 abgestützt.

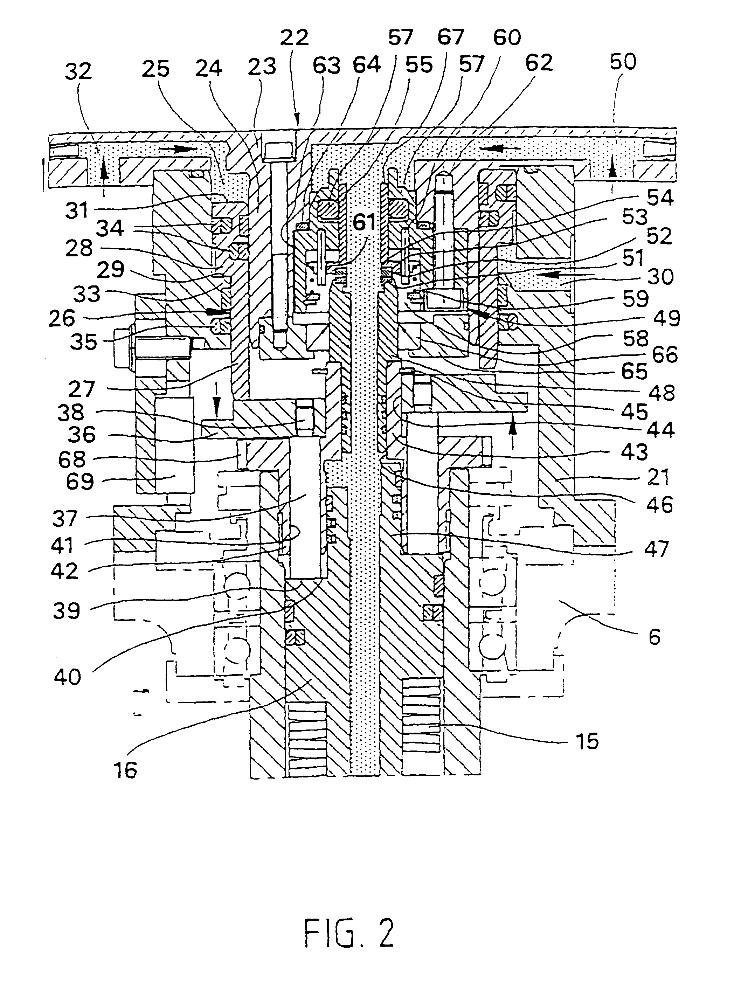

Wie insbesondere aus Fig. 2 hervorgeht, ist die Betätigungseinrichtung 12 als hydraulische Zylinder/Kolben-Einheit ausgebildet, die in einem am hinteren Lagerdeckel 6 montierten Gehäuseteil 21 untergebracht ist. Das nach hinten offene Ende des Gehäuseteils 21 ist durch einen Verschlußdeckel 22 geschlossen, der einen an der hinteren Stirnfläche des Gehäuseteils 21 anliegenden Anschlußflansch 23 und einen in das Gehäuseteil 21 ragenden zylindrischen Innenteil 24 aufweist. Die Mantelfläche des zylindrischen Innenteils 24 begrenzt mit der Innenwand des Gehäuseteils 21 einen Ringraum 25, in dem ein ringzylindrischer Kolben 26 axial verschiebbar angeordnet ist. Der Kolben 26 weist einen zur Arbeitsspindel 2 gewandten vorderen Bereich 27 mit geringerem Außendurchmesser und einen hinteren Bereich 28 mit größerem Außendurchmesser auf. Eine ringförmige Stirnfläche 29 am Übergang zwischen den Bereichen dient als Kolbenfläche zur Druckbeaufschlagung des Kolbens 26 in Einfahrrichtung. In dem Gehäuseteil 21 ist ein zu der ringförmigen Stirnfläche 29 führender Fluidkanal 30 vorgesehen. Die hintere Endfläche 31 des Bereichs 28 bildet die Kolbenfläche zur Druckbeaufschlagung des Kolbens in Ausfahrrichtung. Zu der Endfläche 31 führt ein in den Anschlußflansch 23 angeordneter Fluidkanal 32. Die Innenwand des Gehäuseteils 21 ist über einen Ringabsatz 33 abgestuft, an dem die ringförmige Stirnfläche 29 in der vollständig ausgefahrenen Stellung des Kolbens 26 zur Anlage gelangt. In dem hinteren Bereich 28 des Kolbens 26 sind Dichtelemente 34 zur Abdichtung des Kolbens 26 gegenüber dem Gehäuseteil 21 und dem zylindrischen Innenteil 24 angeordnet. Eine im Gehäuseteil 21 angeordnete Dichtung 35 liegt an der Außenseite am vorderen Bereich 27 des Kolbens 26 an.

Der Kolben 26 drückt beim Ausfahren auf einen axial verschiebbaren Druckring 36, an dem auf die Spannstange 16 wirkende Zylinderstifte 37 befestigt sind. Die Zylinderstifte 37 sind über rückseitige Gewindezapfen 38 in entsprechende Gewindebohrungen im Druckring 36 eingeschraubt und liegen mit ihren vorderen Stirnflächen 39 an einem hinteren Ringbund 40 der Spannstange 15 an. An ihrem Außenumfang sind die Zylinderstifte 37 in Bohrungen 41 einer Zwischenbuchse 42 eingeführt, die in das hintere Ende der Arbeitsspindel 2 eingeschraubt ist. Auf einem hinteren Zylinderabsatz 43 der Zwischenbuchse 42 ist der Druckring 36 mit seiner Innenbohrung 44 axial verschiebbar geführt und durch einen am Ende des Zylinderabsatzes 43 angeordneten Federring 45 axialgesichert. Die Zwischenbuchse 42 hat eine abgesetzte Durchgangsbohrung 46, in deren vorderem Bereich mit dem größeren Innendurchmesser ein zylindrischer Endansatz 47 der Spannstange 16 dichtend und axial verschiebbar geführt ist. In den hinteren Bereich der Durchgangsbohrung 46 mit dem geringeren Innendurchmesser ist ein hohler Anschlußstutzen 48 einer Drehdurchführung 49 druckdicht eingepreßt.

Die Drehdurchführung 49 dient zur Überleitung eines unter Druck stehenden Kühlmittels von einer stationären Zufuhrleitung 50 in die bei der Bearbeitung mit der Arbeitsspindel 2 rotierende Spanneinheit 11, über die das Kühlmittel zu einem durch das Werkzeug verlaufenden Kühlmittelkanal gelangt. Die Zufuhrleitung 50 für das Kühlmittel ist ebenfalls in dem Anschlußflansch 23 angeordnet und führt zu einem Einlaß der Drehdurchführung 49.

Für die abgedichtete Einspeisung des Kühlmittels weist die Drehdurchführung 49 einen an der hinteren Stirnfläche des Anschlußstutzens 48 fixierten Gegenring 51 auf, der an einem Gleitring 52 an der vorderen Stirnfläche eines scheibenförmig erweiterten Teils 53 einer axial beweglichen Hülse 54 anliegt. Der Gegenring 51 und der Gleitring 52 bestehen vorzugsweise aus Keramik. Die Hülse 54 ist mit ihrem hinteren zylindrischen Teil 55 in einer entsprechenden Bohrung einer Aufnahmebuchse 56 axial verschiebbar geführt und über einen Dichtungsring 57 abgedichtet. Der scheibenförmig erweiterte Teil 53 der Hülse 54 ist in einem vergrößerten Abschnitt 58 aufgenommen und wird durch eine Feder 59 in Richtung der Trennung von Gleit- und Gegenring beaufschlagt. Zur Zentrierung und Verdrehsicherung der Hülse 54 sind in der Aufnahmebuchse 56 Zentrierstifte 60 fixiert, auf denen der scheibenförmig erweiterte Teil 53 über entsprechende Bohrungen 61 verschiebbar geführt ist.

Die Aufnahmebuchse 56 ist über Schrauben 62 in einer entsprechenden Ausnehmung 63 durch einen Dichtring 64 abgedichtet an der Innenseite des Verschlußdeckels 22 montiert. An der zur Arbeitsspindel 2 gerichteten Stirnseite des Verschlußdeckels 22 ist ein Verschlußring 65 mit einer Dichtung 66 angeordnet.

Über die Zufuhrleitung 50 wird das Kühlmittel in den Spindelkopf 1 eingeleitet und gelangt zu dem Eingang der Drehdurchführung 49. Der Kühlmitteldruck wirkt auf die hintere Stirnfläche 67 der Hülse 54 und drückt somit den G leitring 52 am vorderen Ende der Hülse 54 an den Gegenring 51 an. Dadurch wird eine dichte Verbindung zwischen der verdrehgesicherten Hülse 54 und dem mit der Arbeitsspindel 2 bei der Bearbeitung rotierenden Anschlußstutzen 48 der Drehdurchführung 49 erreicht. Über den hohlen Anschlußstutzen 48 und die Durchgangsbohrung innerhalb der Zwischenbuchse 42 gelangt das Kühlschmiermittel in die hohle Spannstange 16 und von dort über die Spannbuchse 13 zum Werkzeug. Wenn kein Kühlmittel zugeführt wird, wirkt kein Kühlmitteldruck auf die hintere Stirnfläche 67 der Hülse 54, so daß diese durch die Feder 59 vom Anschlußstutzen 48 wegbewegt wird, wobei der Gleitring 52 vom Gegenring 51 wegbewegt wird. Dadurch wird erreicht, daß der Gleit- und Gegenring nur dann aneinanderreihen, wenn eine innere Kühlmittelzufuhr benötigt und daher einer dichtende Verbindung erforderlich ist. Damit kann der Verschleiß von Gleit- und Gegenring minimiert werden.

An dem Außenumfang der Zwischenbuchse 42 ist eine Außenverzahnung 68 vorgesehen, in die ein Drehgeber zur Erfassung der Arbeitsspindelposition eingreift. An der Außenseite des Gehäuseteils 21 ist ferner ein der Mantelfläche des Druckrings 36 zugewandter Endschalter 69 zur Erfassung der Position des Werkzeugspanners angeordnet.

Zum Lösen des Werkzeugs wird der Kolben 26 über den Fluidkanal 32 mit einem Druckfluid beaufschlagt, wobei er aus der in Fig. 2 in der rechten Bildhälfte dargestellten Spannstellung in die in der linken Bildhälfte dargestellte Lösestellung bewegt wird. Der Kolben 26 schiebt die Spannstange 16 über den Druckring 36 und die Zylinderstifte 37 nach vorne, d.h. in Fig. 2 nach unten, wobei das Tellerfederpaket 15 zusammengedrückt wird. Dadurch wird auch die Spannbuchse 13 nach unten bewegt, wobei die Greifer 17 in einen erweiterten Bereich gelangen. Dort werden sie über Federn nach außen gespreizt und geben das Werkzeug frei.

Zum Spannen des Werkzeugs wird der Fluidkanal 30 mit Druck beaufschlagt, wobei der Kolben 26 aus der Lösestellung in die Spannstellung bewegt und die Spannstange 16 mit der Spannbuchse 13 unter der Wirkung des Tellerfederpakets 15 in die Arbeitsspindel 2 eingezogen wird. Dabei werden auch die Greifer 17 nach innen gedrückt und greifen in die Ringnut an einem in die Arbeitsspindel 2 eingesetzten Werkzeug ein. Der Kolben 26 fährt soweit ein, daß seine vordere Stirnfläche in der Spannstellung von dem Druckring 36 beabstandet ist. Dadurch wird vermieden, daß der bei der Bearbeitung mit der Arbeitsspindel 2 rotierende Druckring an dem Kolben 26 reibt und Verschleißerscheinungen hervorruft.

## Patentansprüche

1. Spindeleinheit für Werkzeugmaschinen, mit
- einer in einem Gehäuse (7) drehbar gelagerten und durch einen Motor (8) antreibbaren Arbeitsspindel (2) zur Aufnahme eines Werkzeugs,
- einer Spanneinheit (11) mit Betätigungseinrichtung (12), die als Zylinder/Kolben-Einheit mit einem Kolben (26) ausgebildet ist, und
- einer in die Spanneinheit (11) integrierten inneren Kühlmittelzufuhr (14) zum Werkzeug, die eine innerhalb der Betätigungseinrichtung (12) angeordnete Drehdurchführung (49) zur Überleitung des Kühlmittels von einer stationären Zuführleitung (50) in die Spanneinheit (11) aufweist,
**dadurch gekennzeichnet, daß**
- der Kolben (26) der Zylinder/Kolben-Einheit als ringzylindrisches Bauteil ausgebildet und in einem Ringraum (25) zwischen einem Gehäuseteil (21) und einem zylindrischen Innenteil (24) angeordnet ist, und
- die Drehdurchführung (49) in das zylindrische Innenteil (24) des Gehäuses eingebaut ist.

2. Spindeleinheit nach Anspruch 1, **dadurch gekennzeichnet, daß** die Drehdurchführung (49) einen Anschlußstutzen (48) und eine durch den Kühlmitteldruck dichtend an den Anschlußstutzen (48) angepreßte Hülse (54) aufweist.

3. Spindeleinheit nach Anspruch 2, **dadurch gekennzeichnet, daß** die Hülse (54) einen in die Zufuhrleitung (50) mündenden zylindrischen Teil (55) aufweist, dessen Stirnseite (67) durch den Kühlmitteldruck beaufschlagt wird.

4. Spindeleinheit nach Anspruch 2 oder 3, **dadurch gekennzeichnet, daß** an den aneinandergrenzenden Stirnflächen der Hülse (54) und des Anschlußstutzens (48) ein verschleißfester Gleitring (52) bzw. Gegenring (51) angeordnet sind.

5. Spindeleinheit nach Anspruch 2 oder 3, **dadurch gekennzeichnet, daß** an der Hülse (54) eine Feder (59) zum Wegdrücken der Hülse (54) vom Anschlußstutzen (48) angeordnet ist.

6. Spindeleinheit nach einem der Ansprüche 2 bis 5, **dadurch gekennzeichnet, daß** der Anschlußstutzen (48) abgedichtet in eine hohle Zwischenbuchse (42) eingesteckt ist, die in das hintere Ende der Arbeitsspindel (2) eingeschraubt ist.

7. Spindeleinheit nach einem der Ansprüche 1 bis 6, **dadurch gekennzeichnet, daß** der Kolben (26) über einen mit Zylinderstiften (37) versehenen Druckring (36) auf eine Spannstange (16) der Spanneinheit (11) wirkt.

8. Spindeleinheit nach Anspruch 7, **dadurch gekennzeichnet, daß** die Zylinderstifte (37) in entsprechenden Bohrungen der Zwischenbuchse (42) axial verschiebbar geführt sind.

9. Spindeleinheit nach Anspruch 7 oder 8, **dadurch gekennzeichnet, daß** der Druckring (36) mit seiner Innenbohrung (44) auf einem hinteren Zylinderabsatz (43) der Zwischenbuchse (42) axial verschiebbar geführt und durch einen Federring (45) axial gesichert ist.

10. Spindeleinheit nach einem der vorhergehenden Ansprüche, **dadurch gekennzeichnet, daß** der Motor (8) die Arbeitsspindel (2) konzentrisch umgibt, und daß dessen Rotor (9) drehfest mit der Arbeitsspindel (2) verbunden ist.

## Claims

1. A spindle unit for machine tools, with
- a working spindle (2) intended to receive a tool, this spindle being rotatably mounted in a housing (7) and capable of being driven by a motor (8),
- a clamping unit (11) having an actuating arrangement (12) which is constructed as a piston/cylinder unit having a piston (26), and
- an internal coolant supply (14) which is integrated into the clamping unit (11), for supplying the tool, and which has a rotary duct (49) disposed within the actuating arrangement (12) for transferring the coolant from a stationary supply line (50) to the clamping unit (11),
**characterised in that**
- the piston (26) of the cylinder/piston unit is constructed as an annular-cylindrical component and is disposed in an annular space (25) between a housing part (21) and a cylindrical inner part (24), and
- the rotary duct (49) is built into the cylindrical inner part (24) of the housing.

2. A spindle unit according to Claim 1, **characterised in that** the rotary duct (49) has a connection piece (48) and a sleeve (54) which is pressed onto the connection piece (48) to seal it by the coolant pressure.

3. A spindle unit according to Claim 2, **characterised in that** the sleeve (54) has a cylindrical part (55) which opens into the supply line (50) and of which the end face (67) is acted upon by the coolant pressure.

4. A spindle unit according to Claim 2 or 3, **characterised in that** a wear-resistant slip ring (52) and counter-ring (51) respectively are disposed on the mutually adjoining end faces of the sleeve (54) and of the connection piece (48).

5. A spindle unit according to Claim 2 or 3, **characterised in that** a spring (59) is disposed on the sleeve (54) to push the sleeve (54) away from the connection piece (48).

6. A spindle unit according to one of Claims 2 to 5, **characterised in that** the connection piece (48) is inserted in a sealed manner into a hollow intermediate bush (42) which is screwed into the rear end of the working spindle (2).

7. A spindle unit according to one of Claims 1 to 6, **characterised in that** the piston (26) acts on a clamping rod (16) of the clamping unit (11) by way of a thrust collar (36) provided with cylindrical pins (37).

8. A spindle unit according to Claim 7, **characterised in that** the cylindrical pins (37) are guided so as to be axially movable in corresponding bores in the intermediate bush (42).

9. A spindle unit according to Claim 7 or 8, **characterised in that** the thrust collar (36) is guided so as to be axially movable with its inner bore (44) on a rear cylindrical shoulder (43) of the intermediate bush (42), and is axially secured by a lock washer (45).

10. A spindle unit according to one of the preceding claims, **characterised in that** the motor (8) concentrically surrounds the working spindle (2), and **in that** the rotor (9) of the motor (8) is connected to the working spindle (2) in a manner fixed in rotation therewith.

## Revendications

1. Unité de broche pour machines-outils, comportant
- une broche de travail (2), qui est montée avec liberté de rotation dans un carter (7), et qui peut être entraînée par un moteur (8), pour recevoir un outil,
- un organe de bridage (11) avec dispositif de manoeuvre (12), qui est réalisé sous forme d'unité à piston-et-cylindre avec un piston (26),
- une amenée de réfrigérant intérieure (14, 49), intégrée dans l'organe de bridage (11), vers l'outil, qui présente, pour transférer le réfrigérant depuis une conduite d'arrivée fixe (50) jusque dans l'organe de bridage (11), un passage tournant (49) disposé à l'intérieur du dispositif de manoeuvre (12),
**caractérisée par le fait que**
- le piston (26) de l'unité à piston-et-cylindre est réalisé comme un composant cylindrique annulaire disposé dans un espace annulaire (25) entre une partie (21) du carter et une partie intérieure cylindrique (24), et en ce que
- le passage tournant (49) est réalisé dans la partie intérieure cylindrique (24) du carter.

2. Unité de broche selon la revendication 1, **caractérisée par le fait que** le passage tournant (49) présente une tubulure de raccordement (48) et un manchon (54) pressé de façon étanche contre la tubulure de raccordement (48) par la pression du réfrigérant.

3. Unité de broche selon la revendication 2, **caractérisée par le fait que** le manchon (54) présente une partie cylindrique (55) qui débouche dans la conduite d'arrivée (50) et dont la face frontale (67) est attaquée par la pression du réfrigérant.

4. Unité de broche selon la revendication 2 ou 3, **caractérisée par le fait que** sur les surfaces frontales, se jouxtant l'une l'autre, du manchon (54) et de la tubulure de raccordement (48), sont disposées respectivement une bague glissante (52) et une contre-bague (51) résistant à l'usure.

5. Unité de broche selon la revendication 2 ou 3, **caractérisée par le fait que** sur le manchon (54) est disposé un ressort (59) pour repousser la douille (54) en éloignement de la tubulure de raccordement (48).

6. Unité de broche selon l'une des revendications 2 à 5, **caractérisée par le fait que** la tubulure de raccordement (48) est enfichée, avec étanchéité, dans un manchon intermédiaire creux (42) vissé dans l'extrémité arrière de la broche de travail (2).

7. Unité de broche selon l'une des revendications 1 à 6, **caractérisé par le fait que** le piston (26) agit sur un tirant (16) de l'organe de bridage (11) par l'intermédiaire d'une bague de pression (36) munie de goupilles cylindriques (37).

8. Unité de broche selon la revendication 7, **caractérisée par le fait que** les goupilles cylindriques (37) sont guidées, avec liberté de coulisser axialement, dans des perçages correspondants du manchon intermédiaire (42).

9. Unité de broche selon la revendication 7 ou 8, **caractérisée par le fait que**, par son perçage intérieur (44), la bague de pression (36) est guidée, avec liberté de coulisser axialement, sur un talon cylindrique arrière (43) du manchon intermédiaire (42) et qu'elle est bloquée axialement par une rondelle élastique (45).

10. Unité de broche selon l'une des revendications précédentes, **caractérisée par le fait que** le moteur (8) entoure concentriquement la broche de travail (2) et que son rotor (9) est relié, solidairement en rotation, à la broche de travail (2).
